(19) Europäisches Patentamt
European Patent Office
Office européen des brevets

(11) **EP 2 702 373 B1**

(12) **EUROPÄISCHE PATENTSCHRIFT**

(45) Veröffentlichungstag und Bekanntmachung des Hinweises auf die Patenterteilung:
**27.11.2019 Patentblatt 2019/48**

(21) Anmeldenummer: **12714562.1**

(22) Anmeldetag: **15.03.2012**

(51) Int Cl.:
*G01N 9/00* (2006.01)    *G01N 11/08* (2006.01)
*G01F 9/00* (2006.01)    *G01N 11/00* (2006.01)
*G01F 25/00* (2006.01)

(86) Internationale Anmeldenummer:
**PCT/EP2012/001163**

(87) Internationale Veröffentlichungsnummer:
**WO 2012/146336 (01.11.2012 Gazette 2012/44)**

(54) **VORRICHTUNG ZUM MESSEN EINES KRAFTSTOFFFLUSSES UND KALIBRIERVORRICHTUNG DAFÜR**

DEVICE FOR MEASURING A FUEL FLOW AND CALIBRATING DEVICE THEREFOR

DISPOSITIF DE MESURE D'UN DÉBIT DE CARBURANT ET DISPOSITIF DE CALIBRAGE À CET EFFET

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **29.04.2011 DE 102011100029**

(43) Veröffentlichungstag der Anmeldung:
**05.03.2014 Patentblatt 2014/10**

(73) Patentinhaber: **HORIBA Europe GmbH**
**64293 Darmstadt (DE)**

(72) Erfinder:
• **THÜRING, Rainer**
**65187 Wiesbaden (DE)**
• **HAGEMANN, Günter**
**38518 Gifhorn (DE)**

(74) Vertreter: **Müller Hoffmann & Partner**
**Patentanwälte mbB**
**St.-Martin-Strasse 58**
**81541 München (DE)**

(56) Entgegenhaltungen:
WO-A2-02/33361    WO-A2-2008/095836
AT-U2- 6 303    FR-A1- 2 917 162
US-A1- 2004 261 492

EP 2 702 373 B1

**Beschreibung**

Die Erfindung betrifft eine Vorrichtung zum Messen eines Kraftstoffflusses gemäß dem Oberbegriff von Anspruch 1.

Eine derartige Kraftstoff-Durchflussmessvorrichtung kann insbesondere bei einem Prüfstand für Verbrennungsmotoren zum Einsatz kommen. Der Prüfstand wird zum Beispiel in der Motorenentwicklung dazu eingesetzt, die Performance der zu prüfenden Motoren zu erfassen. Neben der Schadstoffemission ist der Kraftstoffverbrauch eines Verbrennungsmotors ein entscheidender Parameter, der während eines Prüfvorgangs mit bestmöglicher Genauigkeit erfasst werden soll.

Um die Motorleistung beurteilen zu können, ist es erforderlich, die Menge an verbranntem Kraftstoff und die Energiedichte des verbrannten Kraftstoffs möglichst genau zu bestimmen. Daher wurden Kraftstoffflussmessvorrichtungen entwickelt, die einen als Prüfling dienenden Verbrennungsmotor mit Kraftstoff versorgen, wobei die Parameter des Kraftstoffs (Kraftstofftemperatur, Kraftstoffdruck etc.) konstant gehalten werden. Parallel zu der Bereitstellung des auf diese Weise konditionierten Kraftstoffs wird der Massenstrom des Kraftstoffs erfasst, um den Verbrauch des Motors bestimmen zu können.

Im Betrieb des Prüfstands bzw. des Kraftstoffdurchflussmessers muss die Messqualität der Kraftstoffdurchflussmessvorrichtung sichergestellt werden. Diese Anforderung ergibt sich nicht nur aus technischen Überlegungen, sondern folgt auch aus diversen Qualitätsvorschriften (ISO 9000; VDA-Richtlinien 6.1 und 6.4; GUM-Guide to the Determination of Uncertainties in Measurements). Dementsprechend sind regelmäßige Kalibrierungen der Durchflussmessvorrichtungen erforderlich, die in der Praxis sehr aufwändig sind und häufig nur von Spezialisten durchgeführt werden können. Übliche Kalibrierlabors sind meist nicht in der Lage, die Kraftstoffdurchflussmesser eines Prüfstands zu kalibrieren, da das dazu erforderliche Know-how fehlt. Die technischen Regelwerke verlangen insbesondere eine Nachvollziehbarkeit der Kalibriervorgänge, sodass die Kalibriermaßnahmen auch nachträglich vollständig dokumentiert sind.

Es sind unterschiedliche Vorrichtungen und Verfahren im Stand der Technik bekannt, die zur Kalibrierung einer Kraftstoffdurchflussmessvorrichtung genutzt werden können.

Aus der EP 1 091 197 A1 ist eine Vorrichtung zur kontinuierlichen Messung des dynamischen Kraftstoffverbrauchs eines Verbrennungsmotors bekannt, bei der stromab von einer Pumpe in einer Kraftstoffzuleitung ein kontinuierlich messender Massenstromsensor vorgesehen ist. Mit Hilfe einer diskontinuierlich messenden Kalibriereinrichtung kann der Massenstromsensor kalibriert werden, wobei die Kalibriereinrichtung während einer Kalibrierung den auch vom Massenstromsensor gemessenen Kraftstoffverbrauch bestimmt. Bei der Kalibrierung werden alle prüfstands- und systemrelevanten Einflussgrößen im Messergebnis als Summe berücksichtigt, ohne dass es möglich ist, einzelne Parameter getrennt voneinander zu überprüfen. Die eigentlich angestrebte Kalibrierung des Massenstromsensors ist damit, insbesondere bei kleinen Durchflusswerten, nur eingeschränkt möglich.

So werden bei heute üblichen Kalibrierverfahren meist alle Messungenauigkeiten in ihrer Gesamtheit erfasst. Zu diesem Zweck werden sogenannte Kalibrierwagen, also Rollwagen, auf denen die Kalibriervorrichtung installiert ist, in die Prüfstände gerollt und dort in die Kraftstoffführung stromauf oder stromab von der Kraftstoffdurchflussmessvorrichtung installiert. Dafür muss die Kraftstoffleitung geöffnet werden, sodass Kraftstoff austreten kann, was zu einer Gefährdung der Personen im Umfeld des Prüfstands führen kann. Zudem muss der Betrieb des Prüfstands für längere Zeit unterbrochen werden, um den Kalibrierwagen zu installieren. Das Kalibrierverfahren selbst muss von entsprechend qualifizierten Bedienpersonen durchgeführt werden, die jedoch meist nicht am Ort des Prüfstands beschäftigt sind, sondern vom Hersteller der zu kalibrierenden Kraftstoffdurchflussmessvorrichtung bereitgestellt werden. Die Verfügbarkeit dieser Personen ist somit begrenzt und erfordert eine sorgfältige Zeitplanung.

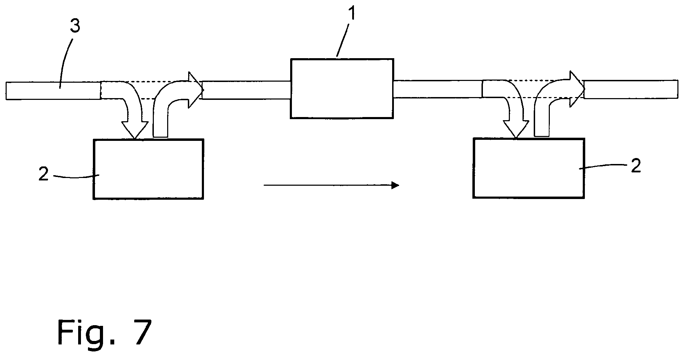

Fig. 7 zeigt den Aufbau einer bekannten Kraftstoffdurchflussmessvorrichtung 1 mit einer Referenzvorrichtung 2, die stromauf oder stromab von der Kraftstoffdurchflussmessvorrichtung 1 in eine Kraftstoffleitung 3 eingebaut werden kann. Die Referenzvorrichtung 2 ist auf einem Wagen angeordnet und beweglich, sodass sie bei Bedarf zu dem Prüfstand gefahren werden kann, der kalibriert werden soll. Zum Installieren der Referenzvorrichtung 2 muss die Kraftstoffleitung 3 aufgetrennt werden, sodass die Referenzvorrichtung 2 eingebaut werden kann. Nach Beenden der Kalibrierarbeiten ist die Referenzvorrichtung 2 wieder auszubauen und die Kraftstoffleitung 3 zu schließen.

Aus der WO 02/33361 A2 ist eine Vorrichtung zum Aufrechterhalten eines konstanten Druckabfalls über eine Gasfluss-Messeinrichtung bekannt. Stromab von der Gasfluss-Messeinrichtung ist eine Verifikationseinrichtung vorgesehen, zum Überprüfen der Messgenauigkeit der Messeinrichtung.

Der Erfindung liegt die Aufgabe zugrunde, eine Vorrichtung zum Messen eines Kraftstoffflusses anzugeben, die zuverlässig und entsprechend nationaler oder internationaler Standards kalibriert werden kann, ohne dass eine nennenswerte Unterbrechung des Betriebs erforderlich ist. Zudem wird angestrebt, dass die Kalibriermaßnahmen auch durch Bedienpersonal durchgeführt werden können, das nicht speziell zum Kalibrieren derartiger Vorrichtungen ausgebildet ist.

Die Aufgabe wird durch eine Vorrichtung gemäß Anspruch 1 gelöst. Weiterentwicklungen der Erfindung sowie vorteilhafte Verfahren unter Nutzung der erfindungsgemäßen Vorrichtung sind in den abhängigen Ansprüchen angegeben.

Eine Vorrichtung zum Messen eines Kraftstoffflusses weist auf: ein Messmodul zum Messen des durch das Messmodul geführten Kraftstoffflusses, ein stromab von dem Messmodul angeordnetes Konditioniermodul zum Konditionieren des Kraftstoffs und ein stromab von dem Messmodul vorgesehenes Verifikationsmodul zum Überprüfen der Messgenauigkeit des Messmoduls. Das Verifikationsmodul ist als integraler Bestandteil der Vorrichtung fest und dauerhaft installiert und mit dem Messmodul über eine Leitung fest verbunden, derart, dass Kraftstoff stromab von dem Messmodul zu dem Verifikationsmodul führbar ist.

Die Vorrichtung dient insbesondere zum Messen des Kraftstoffflusses zu einem Verbrennungsmotor in einem Prüfstand. Das Messmodul erfüllt die eigentliche Funktion des Messens im Betrieb der Vorrichtung, nämlich insbesondere beim Versorgen eines Prüflings mit Kraftstoff. Das Konditioniermodul dient dazu, den Kraftstoff in der gewünschten Qualität bereitzustellen, insbesondere hinsichtlich Druck und Temperatur. Eine gleichbleibende Temperatur und ein konstanter Druck sind Grundvoraussetzungen für eine präzise Messung des tatsächlichen Kraftstoffverbrauchs eines Verbrennungsmotors.

Das Verifikationsmodul ist in die Vorrichtung integriert und somit fester Bestandteil der Vorrichtung. Das Verifikationsmodul dient zum Verifizieren der vom Messmodul gemessenen Werte für den Kraftstofffluss. Insoweit kann das Verifikationsmodul auch zum Kalibrieren des Messmoduls genutzt werden.

Dadurch, dass das Verifikationsmodul in die Messvorrichtung integriert ist, entfällt das aufwändige und mitunter auch die handelnden Personen gefährdende Umbauen der Messvorrichtung zum Zwecke der Kalibrierung. Vielmehr lässt sich mit Hilfe des Verifikationsmoduls der Kalibriervorgang automatisieren, sodass er auch von ungelernten Arbeitskräften automatisch durchgeführt werden kann. Im Ergebnis genügt es zum Beispiel, dem Bediener der Messvorrichtung lediglich ein "Ok"-Zeichen zu geben, woraus der Bediener schließen kann, dass die Kraftstoffdurchflussmessvorrichtung einsatzbereit ist und die erforderliche Messqualität bereitstellt.

Die Messqualität bzw. - umgekehrt - die Messunsicherheit kann von zahlreichen Faktoren beeinflusst werden. Wie später noch gezeigt wird, ist es möglich, in dem Verifikationsmodul entsprechende Einrichtungen vorzusehen, die diesem Gedanken Rechnung tragen und die Genauigkeit anhand von einzelnen Einflussgrößen bestimmen kann. Einflussgrößen sind zum Beispiel die Umgebungsverhältnisse, die Bedingungen der Kraftstoffleitung, die Temperatur des Kraftstoffs sowie die Temperaturregelung, der Kraftstoffdruck und die Kraftstoffdruckregelung, die Qualität der Kalibrierung, die Dauerhaftigkeit der Kalibrierung sowie statistische Einflussgrößen (Standardabweichung). Das Verifikationsmodul berücksichtigt dies und ist in der Lage, zumindest einzelne Anteile an der Gesamt-Messunsicherheit des Kraftstoffverbrauchs zu plausibilisieren und daraus die exakte Bestimmung der gesamten Messunsicherheit des Kraftstoffdurchflussmessers abzuleiten. Auf diese Weise können die in dem Messmodul verbauten Sensoren individuell hinsichtlich ihrer Messgenauigkeit bzw. ihres Kalibrierungszustandes überprüft werden.

Dementsprechend kann das Verifikationsmodul zum Überprüfen von wenigstens einem, die Messgenauigkeit des Messmoduls betreffenden Parameters ausgebildet sein. Die entsprechenden Parameter ergeben sich zum Beispiel aus dem Standardwerk GUM (Guide to the Determination of Uncertainties in Measurements), einem auf internationalen Vereinbarungen basierenden Standardwerk.

Die mit dem Verifikationsmodul entnommene Kraftstoffmenge wird mit derjenigen Kraftstoffmenge der Durchflussmesseinrichtung im Messmodul verglichen, um die Genauigkeit der Messwerte der Durchflussmesseinrichtung zu überprüfen und damit ihren Kalibrierzustand.

Zwischen dem Messmodul und dem Konditioniermodul kann eine Hauptleitung vorgesehen sein, zum Leiten des Kraftstoffs von dem Messmodul zu dem Konditioniermodul, wobei eine an einer Verzweigungsstelle von der Hauptleitung zu dem Verifikationsmodul abzweigende Nebenleitung vorgesehen sein kann.

Mit Hilfe der Verzweigungsstelle ist es möglich, den Kraftstoff stromab von dem Messmodul wahlweise zu dem Konditioniermodul oder zu dem Verifikationsmodul zu führen. Im normalen Prüfbetrieb soll der Kraftstoff vom Messmodul über das Konditioniermodul zu dem an dem Konditioniermodul anschließbaren Verbrennungsmotor geführt werden. Im Kalibrier- bzw. Verifikationsbetrieb hingegen soll der Kraftstoff ausschließlich stromab von dem Messmodul zu dem Verifikationsmodul geleitet werden.

Zu diesem Zweck kann in dem zwischen der Verzweigungsstelle und dem Konditioniermodul verlaufenden Teil der Hauptleitung eine Schließventileinrichtung vorgesehen sein. Mit Hilfe der Schließventileinrichtung kann der Kraftstofffluss zum Konditioniermodul bei Bedarf unterbunden werden.

Ebenso kann in dem zwischen der Verzweigungsstelle und dem Verifikationsmodul verlaufenden Teil der Nebenleitung eine Schließventileinrichtung vorgesehen sein. Diese Schließventileinrichtung kann im normalen Prüfstandsbetrieb geschlossen werden, wenn kein Kraftstoff zu dem Verifikationsmodul geführt werden muss.

Bei der Bemessung der Leitungen ist anzustreben, dass die Leitungswege möglichst kurz sind, um das Volumen in den Leitungen zwischen dem Messmodul und dem Verifikationsmodul zu minimieren. Darüber hinaus sollten die Leitungen isoliert werden, um auch Temperatureinflüsse ausschließen zu können.

In dem Messmodul kann eine Vorkonditioniereinrichtung und stromab von der Vorkonditioniereinrichtung eine Durchflussmesseinrichtung zum Messen des das Messmodul durchströmenden Kraftstoffflusses als Mess-Kraftstoffmenge vorgesehen sein. Die Vorkonditioniereinrichtung dient dazu, den von einem Vorratsbehälter (Kraftstofftank) zum Beispiel über eine Kraftstoffpumpe zugeführten Kraftstoff bereits hinsichtlich Druck und Temperatur zu konditionieren, sodass die nachgeschaltete Durchflussmesseinrichtung den Kraftstoff in der gewünschten Weise erhält. Sinnvollerweise sind die Eigenschaften, auf die der Kraftstoff durch die Vorkonditioniereinrichtung eingestellt wird, identisch mit den vom Konditioniermodul einzustellenden Eigenschaften.

Bei einer Ausführungsform kann das Verifikationsmodul eine Dosiereinrichtung aufweisen, zum Entnehmen einer als Referenz-Kraftstoffmenge dienenden, genau definierten Menge an Kraftstoff. Dabei können die von dem Messmodul bestimmte Kraftstoffmenge und die von der Dosiereinrichtung bestimmte Referenz-Kraftstoffmenge verglichen werden, um eine Messgenauigkeit des Messmoduls zu bestimmen.

Die Dosiereinrichtung ist somit in der Lage, mit besonderer Genauigkeit eine definierte Kraftstoffmenge, nämlich die Referenz-Kraftstoffmenge zu entnehmen. Wenn das Messmodul die erforderliche Messgenauigkeit aufweist, wird das Messmodul dementsprechend genau die gleiche Kraftstoffmenge (Mess-Kraftstoffmenge) messen, weil die Kraftstoffmenge aufgrund der gleichen Druck- und Temperaturverhältnisse im Gesamtsystem auch das stromauf gelegene Messmodul durchströmt. Durch einen Vergleich der von dem Messmodul bestimmten Mess-Kraftstoffmenge und der Referenz-Kraftstoffmenge kann festgestellt werden, ob das Messmodul die erforderliche Messgenauigkeit erreicht oder ob eine Justierung des Messmoduls erforderlich ist.

Die Dosiereinrichtung wird als eine Kraftstoff-Injektoreinrichtung ausgeführt Eine Kraftststoff-Injektoreinrichtung ist in besonderer Weise geeignet, die Referenz-Kraftstoffmenge entsprechend den Vorgaben mit hoher Genauigkeit zu dosieren.

Eine Injektoreinrichtung bzw. ein Kraftstoffinjektor hat sich als zuverlässige Kraftstoffdosiereinrichtung bei Verbrennungsmotoren bewährt. Mit dem Injektor werden verschiedene wohldefinierte Durchflüsse reproduzierbar realisiert. So kann mit Hilfe des Injektors die für die Vergleichsbetrachtung im Verifikationsmodul benötigte Kraftstoffmenge aus der Verbindungsleitung zwischen dem Messmodul und dem Konditioniermodul hochgenau entnommen werden. Ein derartiger Injektor ist zum Beispiel aus der DE 10 2006 027 780 A1 bekannt.

Bei einer Variante weist das Verifikationsmodul außer der Dosiereinrichtung einen stromauf von der Dosiereinrichtung angeordneten ersten Drucksensor zum Bestimmen des Drucks des Kraftstoffs stromauf von der Dosiereinrichtung sowie einen stromab von der Dosiereinrichtung angeordneten zweiten Drucksensor zum Bestimmen des Drucks des Kraftstoffs stromab von der Dosiereinrichtung auf. Weiterhin kann ein Temperatursensor zum Bestimmen der Temperatur des Kraftstoffs stromauf oder stromab von der Dosiereinrichtung vorgesehen sein.

Neben der Dosiereinrichtung sind also bei dieser Variante nur drei weitere Sensoren als Messgeräte im Verifikationsmodul notwendig. Alle anderen Angaben sind aufgrund des nachfolgenden formelmäßigen Zusammenhangs bekannt.

Wie oben bereits erläutert, wird die Dosiereinrichtung vorteilhaft in Form eines Kraftstoff-Injektors realisiert Die vom Injektor geförderte Kraftstoffmenge m ist von fünf Einflussgrößen abhängig, sodass gilt

$$m = f(\Delta p,\, t,\, \rho,\, \ddot{o}_t,\, k),$$

mit:

m     = die vom Injektor geförderte Kraftstoffmenge

$\Delta p$     = Druckdifferenz vor und hinter dem Injektor

t     = Temperatur des Kraftstoffs

$\rho$     = Viskosität des Kraftstoffs (Herstellerangaben)

$\ddot{o}_t$     = Öffnungzeit des Injektors

k     = Kennfeld des Injektors (vom Hersteller definiert).

Bei der Erfindung können die Druckdifferenz über die Dosiereinrichtung bzw. über den Injektor sowie die Temperatur des Kraftstoffs gemessen werden. Die Viskosität des Kraftstoffs ist eine charakteristische Größe, die vom Kraftstoffhersteller garantiert und somit bekannt ist. Das Öffnungs- und Schließverhalten des Injektors ist durch das Injektorkennfeld des Herstellers definiert und ergibt sich durch die Erstkalibrierung des Injektors. Ein Messverfahren zum Bestimmen des Injektorkennfelds ist im Übrigen auch in der EP 1 944 502 A1 beschrieben.

Zusammen mit den hier genannten Messgrößen (Temperatur und Druckdifferenz) und den charakteristischen Eigenschaften von Injektor und Kraftstoff kann die durch den Injektor durchfließende Kraftstoffmenge m über die Öffnungszeit $\ddot{o}_t$ des Injektorsventils hochgenau festgelegt werden. Der Injektor eignet sich somit hervorragend zur Förderung der Referenz-Kraftstoffmenge.

Das Verifikationsmodul kann bei einer Variante eine als Durchflussnormal dienende Referenz-Durchflussmesseinrichtung aufweisen, zum Messen der von der Dosiereinrichtung entnommenen Referenz-Kraftstoffmenge als sogenannte Kalibrier-Kraftstoffmenge. Dabei können die von der Dosiereinrichtung entnommene Referenz-Kraftstoffmenge und die von der Referenz-Durchflussmesseinrichtung gemessene Kalibrier-Kraftstoffmenge verglichen werden, um die Dosiergenauigkeit der Dosiereinrichtung zu bestimmen. Bei dieser Variante wird das Verifikationsmodul um ein Durchflussnormal bzw. Referenznormal in der Form der Referenz-Durchflussmesseinrichtung erweitert, sodass der gesamte Durchfluss des Referenzvolumens sowohl die eingebaute Durchflussmesseinrichtung im Messmodul als auch die Referenz-Durchflussmesseinrichtung durchströmt. Damit kann der vom Messmodul gemessene Volumendurchfluss unmittelbar mit dem von der Referenz-Durchflussmesseinrichtung gemessenen Wert verglichen werden, wodurch eine rückführbare Kalibrierung ermöglicht wird. Insbesondere kann auf diese Weise auch die Genauigkeit der Dosiereinrichtung überprüft werden, weil die von der Dosiereinrichtung durch die Entnahme vorgegebene Referenz-Kraftstoffmenge gleichermaßen durch die Durchflussmesseinrichtung im Messmodul und durch die Referenz-Durchflussmesseinrichtung im Verifikationsmodul erfasst wird. Die Komponenten können dann gegeneinander abgeglichen werden.

Bei einer weiteren Variante kann das Messmodul eine Dichtemesseinrichtung aufweisen, zum Bestimmen der Dichte des das Messmodul durchströmenden Kraftstoffs. Das Verifikationsmodul kann eine als Dichtenormal dienende Referenz-Dichtemesseinrichtung aufweisen, zum Bestimmen einer als Referenzdichte dienenden Dichte des das Verifikationsmodul durchströmenden Kraftstoffs. Dabei können die von der Dichtemesseinrichtung des Messmoduls bestimmte Mess-Dichte und die von der Referenz-Dichtemesseinrichtung bestimmte Referenzdichte verglichen werden, um eine Messgenauigkeit des Messmoduls zu bestimmen.

Bei dieser Variante kann unmittelbar die vom im Messmodul eingebaute Dichtemesseinrichtung gemessene Dichte (Mess-Dichte) mit dem von der Referenz-Dichtemesseinrichtung gemessenen Dichtewert verglichen werden, wodurch wiederum eine rückführbare Kalibrierung der Dichtemesseinrichtung und damit des Massedurchflusses ermöglicht wird.

Bei einer weiteren Variante weist die als Kraftstoff-Injektoreinrichtung ausgeführte Dosiereinrichtung, ein Kennfeld auf. Das Verifikationsmodul kann zusätzlich wenigstens einen der folgenden Sensoren aufweisen: einen Differenzdrucksensor oder auch mehrere, z. B. zwei Drucksensoren zum Bestimmen eines Differenzdrucks zwischen einem Eingang und einem Ausgang der Dosiereinrichtung, einen Kraftstofftemperatursensor zum Bestimmen der Kraftstofftemperatur stromauf von der Dosiereinrichtung, und/oder einen Spannungs- oder Stromsensor zum Bestimmen einer zum Betätigen der Dosiereinrichtung erforderlichen elektrischen Spannung oder eines Stroms. Aufgrund von Messergebnissen wenigstens eines dieser Sensoren kann das Kennfeld der Dosiereinrichtung korrigiert werden.

Die genannten Sensoren dienen als Referenzsensoren und werden bei dieser Variante als so genannte Transfernormale (Sensoren mit Gütesiegel) eingesetzt, die als Mess- und Prüfmittel von akkreditierten Kalibrier-Laboratorien kalibriert und überwacht werden. Damit ist die Rückführbarkeit auf nationale Normale, wie von gängigen Qualitätsmanagementsystemen gefordert, sicher gestellt.

Bei einer weiteren Variante kann stromab von dem Konditioniermodul ein weiteres Verifikationsmodul vorgesehen sein, zum Simulieren eines üblicherweise stromab von dem Konditioniermodul an das Konditioniermodul anschließbaren Verbrennungsmotors. Das weitere Verifikationsmodul kann ausgebildet sein zum Entnehmen von unterschiedlichen Kraftstoffmengen entsprechend dem üblichen variablen Verbrauch von Kraftstoff durch einen Verbrennungsmotor.

Diese Variante kann hilfreich sein, um zu ergründen, ob eine zunächst nicht erklärbare Abweichung in Messergebnissen durch den Verbrennungsmotor oder durch die Messumgebung hervorgerufen wird. Um die Plausibilität des Kraftstoffverbrauchs des Verbrennungsmotors zu bestimmen, wird der Verbrennungsmotor von der Messvorrichtung getrennt und durch das weitere Verifikationsmodul ersetzt. Dieses simuliert verschiedene Verbrauchszustände analog zu dem üblichen Verbrauch eines Verbrennungsmotors. In dem weiteren Verifikationsmodul kann dementsprechend auch wieder ein Kraftstoff-Injektor vorgesehen sein, der dem Injektor eines Verbrennungsmotors entspricht. Der durch den Injektor strömende Kraftstoff simuliert den von dem Verbrennungsmotor verbrauchten Kraftstoff.

In der Messvorrichtung kann eine Steuer- und Auswerteeinrichtung vorgesehen sein, zum Durchführen von wenigstens einem Teil der folgenden Funktionen: Ansteuern der Komponenten der Vorrichtung, Betreiben der Messeinrichtungen und Sensoren, Ansteuern der Schließeinrichtungen, Aktivieren des Verifikationsmoduls, Erfassen von Messwerten, Auswerten und Vergleichen von Messwerten.

Die Steuer- und Auswerteeinrichtung kann zum Beispiel mit Hilfe eines Computer-Steuerprogramms realisiert werden, das Bestandteil der Steuerung des Kraftstoffdurchflussmessers sein kann. Das Computer-Steuerprogramm führt die Überprüfung des Kalibrierzustands durch Ansteuern des Verifikationsmoduls durch und braucht zum Beispiel lediglich von einem Bediener des Prüfstands zum Beispiel durch Tastendruck ausgelöst zu werden. Vom Bediener ist während des Verifikations- bzw. Kalibrierungsvorgangs keine weitere Maßnahme vorzunehmen.

Bei einer Ausgestaltung wird ein Verfahren zum Überprüfen eines Kalibrierzustands einer oben angegebenen Kraftstoffdurchflussmessvorrichtung angegeben. Das Verfahren weist die Schritte auf:

- Entnehmen einer genau definierten Referenz-Kraftstoffmenge aus der Hauptleitung zwischen dem Messmodul und dem Konditioniermodul;
- Bestimmen einer zum Bereitstellen der Referenz-Kraftstoffmenge erforderlichen, das Messmodul durchströmenden Kraftstoffmenge als Mess-Kraftstoffmenge durch das Messmodul;
- Vergleichen der Referenz-Kraftstoffmenge mit der Mess-Kraftstoffmenge und Bestimmen einer Genauigkeit der von dem Messmodul erzeugten Messwerte aufgrund einer Abweichung zwischen der Mess-Kraftstoffmenge und der Referenz-Kraftstoffmenge.

Weiterhin wird ein Verfahren zum Bestimmen einer in einem Prüfstand verwendeten Kraftstoffsorte angegeben. In ein und dem gleichen Prüfstand werden üblicherweise unterschiedliche Motortypen geprüft, die jeweils eine geeignete Kraftstoffsorte benötigen. Das oben beschriebene Verifikationsmodul kann auch dazu genutzt werden, die Kraftstoffsorte automatisiert zu bestimmen, die sich in den Kraftstoffleitungen zum Motor befindet. Ein Prüfstandsautomatisierungssystem kann diese Funktionalität nutzen, um zu prüfen, ob der auf dem Prüfstand befindliche Motor mit der erforderlichen Kraftstoffsorte versorgt wird, also ob in die Kraftstoffleitungen die "richtige" Kraftstoffart eingespeist wurde, zum Beispiel Diesel, Benzin oder Ethanol.

Das Kraftstoffdurchflussmessgerät ist in die Kraftstoffleitung zwischen dem Kraftstoffvorratstank und dem zu testenden Motor zwischengeschaltet. Zuerst werden die Kraftstoffleitungen bis zum Verbrennungsmotor mit dem neuen Kraftstoff gespült. Danach wird die Abzweigung zum Verifikationsmodul gespült. Bei dieser Spülung muss der Injektor des Verifikationsmoduls mindestens so viel Kraftstoff fördern, wie sich in der Nebenleitung befindet.

Nach dem Spülvorgang kann die Kraftstoffsorte mit Hilfe des nachfolgend beschriebenen Verfahrens bestimmt werden.

Dementsprechend wird ein Verfahren zum Bestimmen einer Kraftstoffsorte mit Hilfe der oben angegebenen Vorrichtung angegeben, mit den Schritten

- Bestimmen einer durch die als Kraftstoff-Injektoreinrichtung ausgeführte Dosiereinrichtung geförderten Kraftstoffmenge;
- Bestimmen einer Druckdifferenz zwischen einem Eingang und einem Ausgang der Dosiereinrichtung;
- Bestimmen der Temperatur des Kraftstoffs;
- Bestimmen einer Öffnungszeit der Dosiereinrichtung;
- Bereitstellen eines Parameter-Kennfelds der Dosiereinrichtung;
- Ableiten einer Viskosität des Kraftstoffs aufgrund der Kraftstoffmenge, der Druckdifferenz, der Temperatur, der Öffnungszeit und des Parameter-Kennfelds;
- Bestimmen der Kraftstoffsorte aufgrund der Viskosität.

Die Parameter entsprechen dem oben bereits erläuterten Zusammenhang $m = f(\Delta p, t, \rho, \ddot{o}_t, k)$. Dies Beziehung kann umgestellt werden zu

$$\rho = f(\Delta p, t, m, \ddot{o}_t, k).$$

Somit hängt die Viskosität p von den anderen Größen ab, die jedoch sämtlich bekannt sind.

Im Speziellen erfolgt durch die Durchführung des Verfahrens dann mit den Schritten: Dosieren einer wohldefinierten Kraftstoffmenge mit dem Injektor; Bestimmen der Viskosität des "unbekannten" Kraftstoffs mit Hilfe der obigen Formel; Bestimmen der Kraftsorte mittels Klassifizierung unter Zuhilfenahme von bekannten Viskositätsdaten. So weist Diesel zum Beispiel die Viskosität 2 ..., 4,5 mm$^2$/s, Euro Super 95 die Viskosität ca. 0,53 mm$^2$/s und Ethanol die Viskosität ca. 1,2 mm$^2$/s auf. Aufgrund dieser signifikanten unterschiedlichen Viskositäten kann jeweils auf den vorhandenen Kraftstoff rückgeschlossen werden.

Diese und weitere Vorteile und Merkmale der Erfindung werden nachfolgend anhand von Beispielen unter Zuhilfenahme der begleitenden Figuren näher erläutert. Es zeigen:

Fig. 1     in schematischer Darstellung den Aufbau einer Vorrichtung zum Messen eines Kraftstoffflusses;

Fig. 2     in schematischer Darstellung den Aufbau eines Verifikationsmoduls, das in der Vorrichtung von Fig. 1 verwendet wird;

Fig. 3     eine andere Ausführungsform des Verifikationsmoduls;

Fig. 4     eine Weiterentwicklung des Verifikationsmoduls;

Fig. 5     eine Ausführungsform mit einem weiteren Verifikationsmodul anstelle eines Verbrennungsmotors;

Fig. 6     eine Anordnung zum Bestimmen einer Kraftstoffsorte;

Fig. 7     eine Kraftstoffdurchflussmessvorrichtung nach dem Stand der Technik.

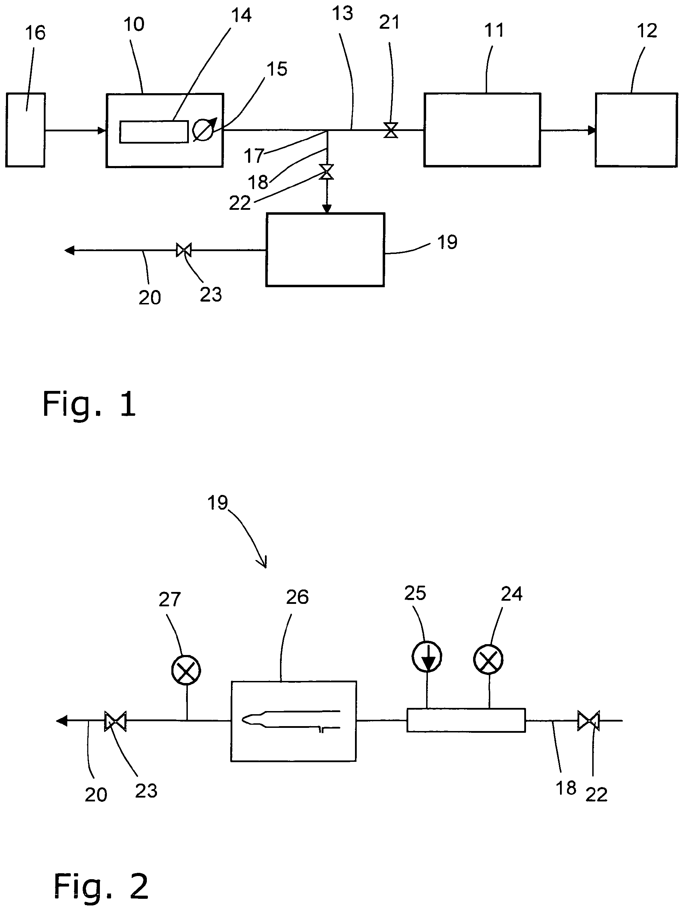

Fig. 1 zeigt den prinzipiellen Aufbau einer erfindungsgemäßen Vorrichtung zum Messen eines Kraftstoffdurchflusses (Kraftstoffdurchflussmessvorrichtung).

Die Vorrichtung weist ein Messmodul 10 sowie ein Konditioniermodul 11 auf, an dem ein nicht zu der Vorrichtung gehörender Verbrennungsmotor 12 anschließbar ist. Das Messmodul 10 ist über eine Hauptleitung 13 mit dem Konditioniermodul 11 verbunden.

In dem Messmodul 10 ist eine Vorkonditioniereinrichtung 14 sowie eine Durchflussmesseinrichtung 15 vorgesehen. Das Messmodul 10 dient zum Messen des durch das Messmodul 10 geführten Kraftstoffflusses. Der Kraftstoff kann zum Beispiel aus einem nicht zur Vorrichtung gehörenden Kraftstoffvorratsbehälter 16 entnommen werden.

Die Vorkonditioniereinrichtung 14 in dem Messmodul 10 dient dazu, den zugeführten Kraftstoff auf eine bestimmte Temperatur und einen bestimmten Druck zu bringen. Nachfolgend durchströmt der Kraftstoff die Durchflussmesseinrichtung 15 und gelangt über die Hauptleitung 13 zu dem Konditioniermodul 11, wo erneut Temperatur und Druck des Kraftstoffs konditioniert werden, bevor der Kraftstoff an den Verbrennungsmotor 12 geliefert wird. Die Komponenten sind Bestandteil eines Prüfstands, in dem die Performance des Verbrennungsmotors 12 geprüft werden soll.

In der Hauptleitung 13 ist eine Verzweigungsstelle 17 vorgesehen, an der eine Nebenleitung 18 von der Hauptleitung 13 abzweigt und zu einem Verifikationsmodul 19 führt. Der das Verifikationsmodul 19 durchströmende Kraftstoff wird anschließend über eine Ableitung 20 abgeführt, zum Beispiel erneut zu dem Kraftstoffvorratsbehälter 16.

In der Hauptleitung 13, zwischen der Verzweigungsstelle 17 und dem Konditioniermodul 11 ist ein erstes Schließventil 21 angeordnet. Weiterhin ist in der Nebenleitung 18 ein zweites Schließventil 22 sowie in der Ableitung 20 ein drittes Schließventil 23 vorgesehen. Mit Hilfe der Schließventile 21, 22 und 23 kann der Kraftstofffluss stromab von dem Messmodul 10 wahlweise ausschließlich zu dem Konditioniermodul 11 oder ausschließlich zu dem Verifikationsmodul 19 geführt werden.

Das Verifikationsmodul 19 ist integraler Bestandteil der Vorrichtung und fest mit dem Messmodul 11 über die möglichst kurzen und gegebenenfalls wärmeisolierten Leitungen 13, 18 verbunden. Somit ist das Verifikationsmodul permanent vorhanden, sodass der von dem Verifikationsmodul durchzuführende Kalibrierbzw. Verifikationsprozess jederzeit durchgeführt werden kann. Es ist - im Unterschied zu dem Stand der Technik gemäß Fig. 7 - nicht erforderlich, bei Bedarf eine Kraftstoffleitung (zum Beispiel die Hauptleitung 13) zu öffnen und ein entsprechendes Verifikationsmodul einzubauen.

Der Aufbau eines Beispiels für ein Verifikationsmodul ist in Fig. 2 gezeigt.

Stromab von dem zweiten Schließventil 22 und der Nebenleitung 18 ist ein erster Drucksensor 24 und ein Temperatursensor 25 vorgesehen, denen sich in Strömungsrichtung ein als Dosiereinrichtung dienender Injektor 26 anschließt. Stromab von dem Injektor 26 ist ein zweiter Drucksensor 27 vorgesehen.

Der Injektor, zum Beispiel ein Kraftstoff-Injektor aus einem Fahrzeug, wie aus der DE 10 2006 027 780 bekannt, wurde oben bereits erläutert. Er dient zum Beispiel zum Einspritzen von Kraftstoff in den Zylinder eines Verbrennungsmotors und ist besonders gut geeignet, eine Referenz-Kraftstoffmenge präzise zu fördern und somit der stromauf von der Nebenleitung 18 verlaufenden Hauptleitung 13 zu entnehmen.

Die von dem Injektor 26 geförderte Referenz-Kraftstoffmenge entspricht im Idealfall der Menge, die gleichzeitig durch die Durchflussmesseinrichtung 15 im Messmodul 10 bestimmt wird. Bei einer Abweichung der Werte kann die Durchflussmesseinrichtung 15 nachjustiert werden, sodass auf diese Weise eine Kalibrierung des Messmoduls 10 möglich ist.

Vor Beginn der Kalibrierung ist das erste Schließventil 21 zum Konditioniermodul 11 zu schließen. Die beiden Schließventile 22 und 23 sind zu öffnen, sodass der Kraftstoff ausschließlich durch das Messmodul 10 und das Verifikationsmodul 19 gefördert wird.

Nach Beenden des Verifikationsprozesses können die beiden Schließventile 22, 23 wieder geschlossen und das erste Schließventil 21 geöffnet werden, sodass nachfolgend der Verbrennungsmotor 12 im Prüfstand geprüft werden kann. Die kalibrierte Durchflussmesseinrichtung 15 sollte dann in der Lage sein, mit hoher Genauigkeit den Kraftstofffluss zu bestimmen, der von dem Verbrennungsmotor 12 angefordert wird.

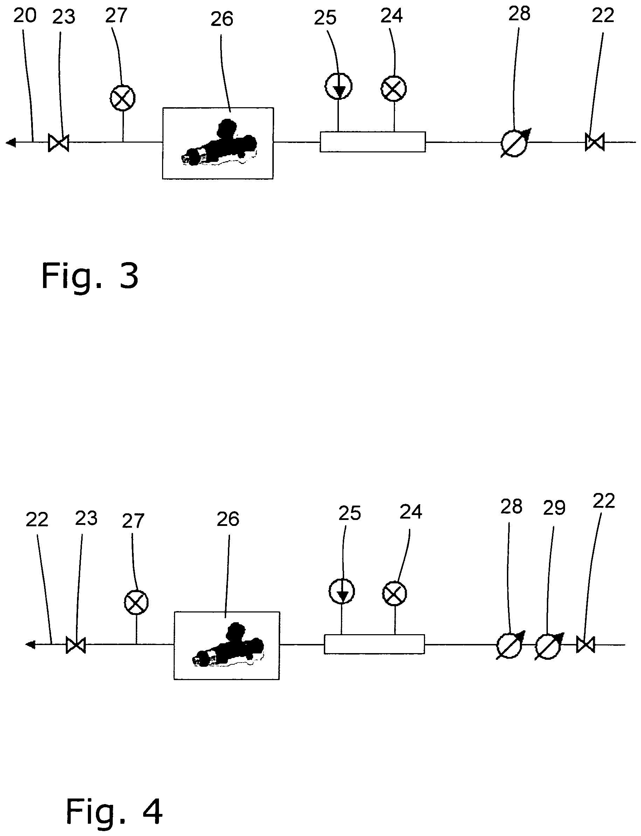

Fig. 3 zeigt eine Variante des Verifikationsmoduls von Fig. 2.

Zusätzlich zu den oben bereits genannten Komponenten ist stromauf von dem Injektor 26 eine als Durchflussnormal dienende Referenz-Durchflussmesseinrichtung 28 vorgesehen. Die Referenz-Durchflussmesseinrichtung 28 ist ein hochgenaues, z.B. in einem Labor kalibriertes Messinstrument und daher in der Lage, den strömenden Kraftstoff mit höchster Präzision zu messen.

Mit Hilfe der Referenz-Durchflussmesseinrichtung 28 ist es einerseits möglich, direkt auch die Durchflussmesseinrichtung 15 zu überprüfen, indem die beiden Messwerte miteinander verglichen werden. Zudem ist es aber auch möglich, mit Hilfe der Referenz-Durchflussmesseinrichtung 28 den Injektor 26 zu kalibrieren. Dieser wird entsprechend der Herstellerangaben und Kennfelder betrieben, um eine bestimmte Referenz-Kraftstoffmenge zu dosieren. Diese Referenz-Kraftstoffmenge wird auch von der Referenz-Durchflussmesseinrichtung 28 erfasst und gemessen, wobei das Messergebnis hier als "Kalibrier-Kraftstoffmenge" bezeichnet wird. Wenn die Messergebnisse voneinander abweichen, muss das Injektorkennfeld des Injektors 26 korrigiert werden.

Fig. 4 zeigt eine weitere Variante des Verifikationsmoduls von Fig. 3. Zusätzlich ist eine, z.B. in einem Labor kalibrierte, hoch-genaue Referenz-Dichtemesseinrichtung 29 als Dichtenormal vorgesehen. Damit kann unmittelbar die vom im Messmodul 10 eingebauten Dichtesensor gemessene Dichte mit dem von der Referenz-Dichtemesseinrichtung 29 gemessenen Dichtewert verglichen werden, wodurch wiederum eine rückführbare Kalibrierung des Dichtesensors im Messmodul 10 und damit auch des Massedurchflusses ermöglicht wird.

Anhand der Verifikationsmodule der Fig. 2 bis 4 wird deutlich, wie durch geeigneten Aufbau des Verifikationsmoduls 19 einzelne Parameter des Messmoduls 10 kalibriert werden können, die die Gesamtgenauigkeit des Messmoduls 10 mitbestimmen.

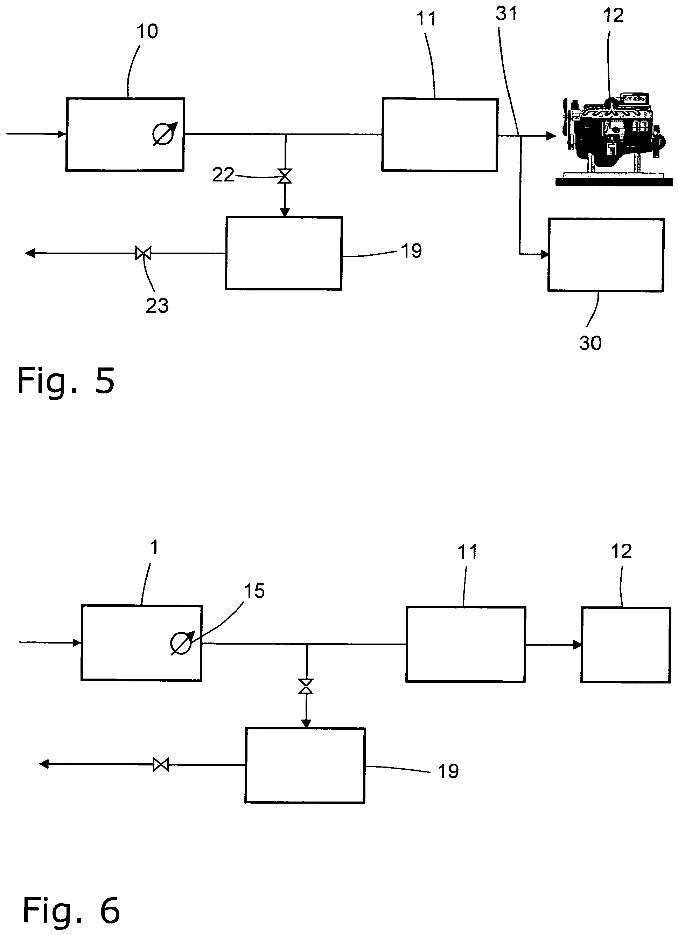

Fig. 5 zeigt eine Variante, bei dem stromab von dem Konditioniermodul 11 und parallel zu dem Verbrennungsmotor 12 ein weiteres (zweites) Verifikationsmodul 30 angeordnet ist.

Das zweite Verifikationsmodul 30 kann - z.B. über eine Verzweigung 31 - alternativ zu dem Verbrennungsmotor 12 an das Konditioniermodul 11 angeschlossen werden und das Kraftstoffverbrauchsverhalten des Verbrennungsmotors 12 simulieren. Auf diese Weise kann im Bedarfsfall geprüft werden, ob der Verbrennungsmotor 12 oder die gesamte Messvorrichtung ein plausibles Verhalten aufweist.

Auch in dem zweiten Verifikationsmodul 30 kann erneut ein Injektor vorgesehen sein, der zur Dosierung einer genau definierten Kraftstoffmenge ausgebildet ist.

Fig. 6 zeigt eine Variante zu der Anordnung von Fig. 1.

In diesem Fall ist das Verifikationsmodul alternativ oder zusätzlich dazu ausgebildet, die Kraftstoffsorte anhand der Viskosität des geförderten Kraftstoffs zu bestimmen. Das dazu erforderliche Verfahren wurde bereits oben erläutert, sodass zur Vermeidung von Wiederholungen an dieser Stelle darauf verzichtet wird.

**Patentansprüche**

1. Vorrichtung zum Messen eines Kraftstoffflusses, mit

 - einem Messmodul (10) zum Messen des durch das Messmodul (10) geführten Kraftstoffflusses;
 - einem stromab von dem Messmodul (10) angeordneten Konditioniermodul (11) zum Konditionieren des Kraftstoffs; und mit
 - einem stromab von dem Messmodul (10) vorgesehenen Verifikationsmodul (19) zum Überprüfen der Messgenauigkeit des Messmoduls (10);
 wobei
 - das Verifikationsmodul (19) als integraler Bestandteil der Vorrichtung fest und dauerhaft installiert und mit dem Messmodul (10) verbunden ist, derart, dass Kraftstoff stromab von dem Messmodul (10) zu dem Verifikationsmodul (19) führbar ist;
 - zwischen dem Messmodul (10) und dem Konditioniermodul (11) eine Hauptleitung (13) vorgesehen ist, zum Leiten des Kraftstoffs von dem Messmodul (10) zu dem Konditioniermodul (11);
 - eine an einer Verzweigungsstelle (17) von der Hauptleitung (13) zu dem Verifikationsmodul (19) abzweigende Nebenleitung (18) vorgesehen ist;

 - das Verifikationsmodul (19) eine als Kraftstoff-Injektoreinrichtung ausgeführte Dosiereinrichtung (26) zum Entnehmen einer als Referenz-Kraftstoffmenge dienenden, genau definierten Menge an Kraftstoff; und wobei
 - die von dem Messmodul (10) bestimmte Mess-Kraftstoffmenge und die von der Dosiereinrichtung (26) bestimmte Referenz-Kraftstoffmenge vergleichbar sind, um eine Messgenauigkeit des Messmoduls (10) zu bestimmen.

2. Vorrichtung nach Anspruch 1, **dadurch gekennzeichnet, dass** das Verifikationsmodul (19) zum Überprüfen von wenigstens einem die Messgenauigkeit des Messmoduls (10) betreffenden Parameter ausgebildet ist.

3. Vorrichtung nach einem der vorangehenden Ansprüche, **dadurch gekennzeichnet, dass** in dem zwischen der Verzweigungsstelle (17) und dem Konditioniermodul (11) verlaufenden Teil der Hauptleitung (13) eine Schließventileinrichtung (21) vorgesehen ist.

4. Vorrichtung nach einem der vorangehenden Ansprüche, **dadurch gekennzeichnet, dass** in dem zwischen der Verzweigungsstelle (17) und dem Verifikationsmodul (19) verlaufenden Teil der Nebenleitung (18) eine Schließventileinrichtung (22) vorgesehen ist.

5. Vorrichtung nach einem der vorangehenden Ansprüche, **dadurch gekennzeichnet, dass** in dem Messmodul (10) eine Vorkonditioniereinrichtung (14) und stromab von der Vorkonditioniereinrichtung (14) eine Durchflussmesseinrichtung (15) zum Messen des das Messmodul (10) durchströmenden Kraftstoffflusses als Mess-Kraftstoffmenge vorgesehen sind.

6. Vorrichtung nach einem der vorangehenden Ansprüche, **dadurch gekennzeichnet, dass** das Verifikationsmodul (19) aufweist

 - die Dosiereinrichtung (26),
 - einen stromauf von der Dosiereinrichtung (26) angeordneten ersten Drucksensor (24) zum Bestimmen des Drucks des Kraftstoffs stromauf von der Dosiereinrichtung (26),
 - einen stromab von der Dosiereinrichtung (26) angeordneten zweiten Drucksensor (27) zum Bestimmen des Drucks des Kraftstoffs stromab von der Dosiereinrichtung (26),
 - einen Temperatursensor (25) zum Bestimmen der Temperatur des Kraftstoffs.

7. Vorrichtung nach einem der vorangehenden Ansprüche, **dadurch gekennzeichnet, dass**

- das Verifikationsmodul (19) eine Referenz-Durchflussmesseinrichtung (28) aufweist, zum Messen der von der Dosiereinrichtung (26) entnommen Referenz-Kraftstoffmenge als Kalibrier-Kraftstoffmenge; und dass
- die von der Dosiereinrichtung (26) entnommene Referenz-Kraftstoffmenge und die von der Referenz-Durchflussmesseinrichtung (28) gemessene Kalibrier-Kraftstoffmenge vergleichbar sind, um die Dosiergenauigkeit der Dosiereinrichtung (26) zu bestimmen.

8. Vorrichtung nach einem der vorangehenden Ansprüche, **dadurch gekennzeichnet, dass**

    - das Messmodul (10) eine Dichtemesseinrichtung aufweist, zum Bestimmen der Dichte des das Messmodul durchströmenden Kraftstoffs;
    - das Verifikationsmodul (19) eine Referenz-Dichtemesseinrichtung (29) aufweist, zum Bestimmen einer als Referenzdichte dienenden Dichte des das Verifikationsmodul (19) durchströmenden Kraftstoffs; und dass
    - die von der Dichtemesseinrichtung des Messmoduls bestimmte Dichte und die von der Referenz-Dichtemesseinrichtung (29) bestimmte Referenzdichte vergleichbar sind, um eine Messgenauigkeit des Messmoduls (10) zu bestimmen.

9. Vorrichtung nach einem der vorangehenden Ansprüche, **dadurch gekennzeichnet, dass**

    - die Dosiereinrichtung (26) wenigstens einen der folgenden Sensoren aufweist:

        + einen Differenzdrucksensor zum Bestimmen eines Differenzdrucks zwischen einem Eingang und einem Ausgang der Dosiereinrichtung,
        + einen Kraftstofftemperatursensor zum Bestimmen der Kraftstofftemperatur stromauf von der Dosiereinrichtung, und/oder
        + einen Spannungssensor zum Bestimmen einer zum Betätigen der Dosiereinrichtung erforderlichen elektrischen Spannung;
        + einen Stromsensor zum Bestimmen eines zum Betätigen der Dosiereinrichtung erforderlichen elektrischen Stroms;

    und dass
    - aufgrund von Messergebnissen wenigstens eines dieser Sensoren das Kennfeld der Dosiereinrichtung (26) korrigierbar ist.

10. Vorrichtung nach einem der vorangehenden Ansprüche, **dadurch gekennzeichnet, dass**

- stromab von dem Konditioniermodul (11) ein weiteres Verifikationsmodul (30) vorgesehen ist, zum Simulieren eines üblicherweise stromab von dem Konditioniermodul (11) an das Konditioniermodul (11) anschließbaren Verbrennungsmotors (12); und dass
- das weitere Verifikationsmodul (30) ausgebildet ist zum Entnehmen von unterschiedlichen Kraftstoffmengen entsprechend dem variablen Verbrauch von Kraftstoff durch einen Verbrennungsmotor (12).

11. Vorrichtung nach einem der vorangehenden Ansprüche, **dadurch gekennzeichnet, dass** eine Steuer- und Auswerteeinrichtung vorgesehen ist, zum Durchführen von wenigstens einem Teil der folgenden Funktionen:

    - Ansteuern der Komponenten der Vorrichtung,
    - Betreiben der Messeinrichtungen und Sensoren,
    - Ansteuern der Schließventileinrichtungen,
    - Aktivieren des Verifikationsmoduls,
    - Erfassen von Messwerten,
    - Auswerten und Vergleichen von Messwerten.

12. Verfahren zum Überprüfen eines Kalibrierzustands einer Vorrichtung nach einem der vorstehenden Ansprüche, mit den Schritten

    - Entnehmen einer genau definierten Referenz-Kraftstoffmenge aus der Hauptleitung (13) zwischen dem Messmodul (10) und dem Konditioniermodul (11) mittels der Kraftstoff-Injektoreinrichtung ;
    - Bestimmen einer zum Bereitstellen der Referenz-Kraftstoffmenge erforderlichen, das Messmodul (10) durchströmenden Kraftstoffmenge als Mess-Kraftstoffmenge durch das Messmodul (10);
    - Vergleichen der Referenz-Kraftstoffmenge mit der Mess-Kraftstoffmenge und Bestimmen einer Genauigkeit der von dem Messmodul (10) erzeugten Messwerte aufgrund einer Abweichung zwischen der Mess-Kraftstoffmenge und der Referenz-Kraftstoffmenge.

13. Verfahren zum Bestimmen einer Kraftstoffsorte durch eine Vorrichtung nach einem der Ansprüche 1 bis 11, mit den Schritten

    - Bestimmen einer durch die als Kraftstoff-Injektoreinrichtung ausgeführte Dosiereinrichtung (26) geförderten Kraftstoffmenge;
    - Bestimmen einer Druckdifferenz zwischen einem Eingang und einem Ausgang der Dosiereinrichtung (26);
    - Bestimmen der Temperatur des Kraftstoffs;

- Bestimmen einer Öffnungszeit der Dosiereinrichtung (26);
- Bereitstellen eines Parameter-Kennfelds der Dosiereinrichtung (26);
- Ableiten einer Viskosität des Kraftstoffs aufgrund der Kraftstoffmenge, der Druckdifferenz, der Temperatur, der Öffnungszeit und des Parameter-Kennfelds;
- Bestimmen der Kraftstoffsorte aufgrund der Viskosität.

**Claims**

1. A device for measuring a fuel flow, comprising:

   - a measuring module (10) for measuring the fuel flow guided through the measuring module (10);
   - a conditioning module (11) arranged downstream of the measuring module (10) for conditioning the fuel; and
   - a verification module (19) provided downstream of the measuring module (10) for checking the measuring precision of the measuring module (10);
   wherein
   - the verification module (19) is installed firmly and permanently as an integral part of the device and is connected such with the measuring module (10) that the fuel can be guided from the measuring module (10) downstream to the verification module (19);
   - a main pipe (13) for guiding the fuel from the measuring module (10) to the conditioning module (11) is provided between the measuring module (10) and the conditioning module (11);
   - a secondary pipe (18) branching off to the verification module (19) from the main pipe (13) at a branching point (17);
   - the verification module (19) has a dosing unit (26) formed as a fuel injector unit for extracting an exactly defined quantity of fuel serving as a reference fuel quantity, and wherein
   - the measurement fuel quantity determined by the measuring module (10) and the reference fuel quantity determined by the dosing unit (26) are comparable, in order to determine a measuring precision of the measuring module (10).

2. The device according to claim 1, **characterized in that** the verification module (19) is formed for checking at least one of the parameters concerning the measuring precision of the measuring module (10).

3. The device according to one of the preceding claims, **characterized in that** a closing valve unit (21) is provided in the part of the main pipe (13) running between the branching point (17) and the conditioning module (11).

4. The device according to one of the preceding claims, **characterized in that** a closing valve unit (22) is provided in the part of the secondary line (18) running between the branching point (17) and the verification module (19).

5. The device according to one of the preceding claims, **characterized in that** in the measuring module (10) a preconditioning unit (14) and downstream of the preconditioning unit (14) a flow rate measuring unit (15) for measuring the fuel flow flowing through the measuring module (10) as measurement fuel quantity are provided.

6. The device according to one of the preceding claims, **characterized in that** the verification module (19) comprises:

   - the dosing unit (26),
   - a first pressure sensor (24) arranged upstream of the dosing unit (26) for determining the pressure of the fuel upstream of the dosing unit (26),
   - a second pressure sensor (27) arranged downstream of the dosing unit (26) for determining the pressure of the fuel downstream of the dosing unit (26),
   - a temperature sensor (25) for determining the temperature of the fuel.

7. The device according to one of the preceding claims, **characterized in that**

   - the verification module (19) has a reference flow rate measuring unit (28) for measuring the reference fuel quantity extracted by the dosing unit (26) as calibration fuel quantity; and
   - the reference fuel quantity extracted by the dosing unit (26) and the calibration fuel quantity measured by the reference flow rate measuring unit (28) are comparable, in order to determine the dosing precision of the dosing unit (26).

8. The device according to one of the preceding claims, **characterized in that**

   - the measuring module (10) has a density measuring unit for determining the density of the fuel flow through the measuring module (10);
   - the verification module (19) has a reference density measuring unit (29) for determining a density of the fuel flowing through the verification module (19) serving as a reference density; and
   - the density determined by density measuring unit of the measuring module (10) and the reference density determined by the reference density measuring unit (29) are comparable, in order to determine a measuring precision of the measuring module (10).

9. The device according to one of the preceding claims, **characterized in that**

- the dosing unit (26) has at least one of the following sensors:

+ a pressure difference sensor for determining a pressure difference between an inlet and an outlet of the dosing unit,
+ a fuel temperature sensor for determining the fuel temperature up-stream of the dosing unit and/or
+ a voltage sensor for determining an electric voltage necessary for activating the dosing unit;
+ a current sensor for determining an electrical current necessary for activating dosing unit;

and

- because of measurement results of at least one of these sensors the characteristic diagram of the dosing unit (26) is correctable.

10. The device according to one of the preceding claims, **characterized in that**

- a further verification module (30) for simulating a combustion motor (12) typically connectable downstream of the conditioning module (11) to the conditioning module (11) is provided downstream of the conditioning module (11); and
- the further verification module (30) is formed for extracting differing fuel quantities according to variable consumptions of fuel by a combustion motor (12).

11. The device according to one of the preceding claims, **characterized in that** a controlling and evaluation unit is provided for performing at least a part of the following functions:

- controlling the components of the device,
- operating of the measuring units and sensors,
- controlling of the closing valve units,
- activating of the verification module,
- recording of measurement values,
- evaluating and comparing of measurement values.

12. A method for checking a calibration status of a device according to one of the preceding claims, comprising the steps of:

- extracting an exactly defined reference fuel quantity from the main pipe (13) between the measuring module (10) and the conditioning module (11) by means of the fuel injector unit;
- determining a fuel quantity flowing through the measuring module (10) necessary for providing the reference fuel quantity as measurement fuel quantity by the measuring module (10);
- comparing the reference fuel quantity with the measurement fuel quantity and determining a precision of the measuring values generated by the measuring module (10) based on a deviation between the measuring fuel quantity and the reference fuel quantity.

13. Method for determining a fuel type by a device according to one of claims 1 to 11, comprising the steps of:

- determining a fuel quantity forwarded by the dosing unit (26) formed as fuel injector unit;
- determining a pressure difference between an inlet and an outlet of the dosing unit (26);
- determining the temperature of the fuel;
- determining an opening time of the dosing unit (26);
- providing a parameter characteristic diagram of the dosing unit (26);
- deducing a viscosity of the fuel based on the fuel quantity, the pressure difference, the temperature, the opening time, and the parameter characteristic diagram;
- determining the fuel type according to the viscosity.

**Revendications**

1. Dispositif pour mesurer un débit de carburant, comprenant

- un module de mesure (10) pour mesurer le débit de carburant traversant le module de mesure (10) ;
- un module de conditionnement (11), disposé en aval du module de mesure (10), pour conditionner le carburant ; et avec
- un module de vérification (19), prévu en aval du module de mesure (10), pour contrôler la précision de mesure du module de mesure (10) ; dans lequel
- le module de vérification (19) est installé de manière fixe et durable comme partie intégrante du dispositif et est relié au module de mesure (10) de telle sorte que du carburant soit apte à être amené jusqu'au module de vérification (19) en aval du module de mesure (10) ;
- entre le module de mesure (10) et le module de conditionnement (11) est prévue une conduite principale (13) pour amener le carburant du module de mesure (10) jusqu'au module de conditionnement (11) ;

- il est prévu une conduite secondaire (18) partant, à un embranchement (17), de la conduite principale (13) jusqu'au module de vérification (19) ;

- le module de vérification (19) comporte un dispositif de dosage (26), réalisé comme un dispositif injecteur de carburant, pour prélever une quantité de carburant définie avec précision et servant de quantité de carburant de référence ; et dans lequel

- la quantité de carburant de mesure déterminée par le module de mesure (10) et la quantité de carburant de référence déterminée par le dispositif de dosage (26) sont aptes à être comparées pour déterminer une précision de mesure du module de mesure (10).

2. Dispositif selon la revendication 1, **caractérisé en ce que** le module de vérification (19) est formé pour contrôler au moins un paramètre concernant la précision de mesure du module de mesure (10).

3. Dispositif selon l'une des revendications précédentes, **caractérisé en ce qu'**il est prévu dans la partie de la conduite principale (13) s'étendant entre l'embranchement (17) et le module de conditionnement (11) un dispositif à vanne de fermeture (21).

4. Dispositif selon l'une des revendications précédentes, **caractérisé en ce qu'**il est prévu dans la partie de la conduite secondaire (18) s'étendant entre l'embranchement (17) et le module de vérification (19) un dispositif à vanne de fermeture (22).

5. Dispositif selon l'une des revendications précédentes, **caractérisé en ce qu'**il est prévu dans le module de mesure (10) un dispositif de préconditionnement (14) et, en aval du dispositif de préconditionnement (14), un débitmètre (15) pour mesurer le débit de carburant traversant le module de mesure (10), comme quantité de carburant de mesure.

6. Dispositif selon l'une des revendications précédentes, **caractérisé en ce que** le module de vérification (19) comporte

- le dispositif de dosage (26),
- un premier capteur de pression (24), disposé en amont du dispositif de dosage (26), pour déterminer la pression du carburant en amont du dispositif de dosage (26),
- un deuxième capteur de pression (27), disposé en aval du dispositif de dosage (26), pour déterminer la pression du carburant en aval du dispositif de dosage (26),
- un capteur de température (25) pour déterminer la température du carburant.

7. Dispositif selon l'une des revendications précédentes, **caractérisé en ce que**

- le module de vérification (19) comporte un débitmètre de référence (28) pour mesurer la quantité de carburant de référence prélevée par le dispositif de dosage (26), comme quantité de carburant d'étalonnage ; et **en ce que**
- la quantité de carburant de référence prélevée par le dispositif de dosage (26) et la quantité de carburant d'étalonnage mesurée par le débitmètre de référence (28) sont aptes à être comparées pour déterminer la précision de dosage du dispositif de dosage (26).

8. Dispositif selon l'une des revendications précédentes, **caractérisé en ce que**

- le module de mesure (10) comporte un dispositif de mesure de densité pour déterminer la densité du carburant traversant le module de mesure ;
- le module de vérification (19) comporte un dispositif de mesure de densité de référence (29) pour déterminer une densité, servant de densité de référence, du carburant traversant le module de vérification (19) ; et **en ce que**
- la densité déterminée par le dispositif de mesure de densité du module de mesure et la densité de référence déterminée par le dispositif de mesure de densité de référence (29) sont aptes à être comparées pour déterminer une précision de mesure du module de mesure (10).

9. Dispositif selon l'une des revendications précédentes, **caractérisé en ce que**

- le dispositif de dosage (26) comporte l'un au moins des capteurs suivants :

+ un capteur de pression différentielle pour déterminer une pression différentielle entre une entrée et une sortie du dispositif de dosage,
+ un capteur de température de carburant pour déterminer la température de carburant en amont du dispositif de dosage, et/ou
+ un capteur de tension pour déterminer une tension électrique nécessaire pour actionner le dispositif de dosage ;
+ un capteur de courant pour déterminer un courant électrique nécessaire pour actionner le dispositif de dosage ;

et **en ce que**

- sur la base de résultats de mesure de l'un au moins de ces capteurs, le champ caractéristique du dispositif de dosage (26) est apte à être corrigé.

10. Dispositif selon l'une des revendications précédentes, **caractérisé en ce que**

- en aval du module de conditionnement (11) est prévu un autre module de vérification (30) pour simuler un moteur à combustion interne (12) apte à être raccordé de manière habituelle en aval du module de conditionnement (11) au module de conditionnement (11) ; et **en ce que**
- ledit autre module de vérification (30) est formé pour prélever différentes quantités de carburant selon la consommation variable de carburant par un moteur à combustion interne (12).

11. Dispositif selon l'une des revendications précédentes, **caractérisé en ce qu'**il est prévu un dispositif de commande et d'analyse pour exécuter une partie au moins des fonctions suivantes :

- commande des composants du dispositif,
- fonctionnement des dispositifs de mesure et des capteurs,
- commande des dispositifs à vanne de fermeture,
- activation du module de vérification,
- saisie de valeurs de mesure,
- analyse et comparaison de valeurs de mesure.

12. Procédé pour contrôler un état d'étalonnage d'un dispositif selon l'une des revendications précédentes, comprenant les étapes de

- prélèvement d'une quantité de carburant de référence, définie avec précision, dans la conduite principale (13) entre le module de mesure (10) et le module de conditionnement (11) à l'aide du dispositif injecteur de carburant ;
- détermination d'une quantité de carburant nécessaire pour fournir la quantité de carburant de référence et traversant le module de mesure (10), comme quantité de carburant de mesure, par le module de mesure (10) ;
- comparaison de la quantité de carburant de référence avec la quantité de carburant de mesure, et détermination d'une précision des valeurs de mesure produites par le module de mesure (10) sur la base d'un écart entre la quantité de carburant de mesure et la quantité de carburant de référence.

13. Procédé pour déterminer un type de carburant par un dispositif selon l'une des revendications 1 à 11, comprenant les étapes de

- détermination d'une quantité de carburant acheminée par le dispositif de dosage (26) réalisé comme un dispositif injecteur de carburant ;
- détermination d'une pression différentielle entre une entrée et une sortie du dispositif de dosage (26) ;
- détermination de la température du carburant ;
- détermination d'un temps d'ouverture du dispositif de dosage (26) ;
- fourniture d'un champ caractéristique de paramètres du dispositif de dosage (26) ;
- déduction d'une viscosité du carburant sur la base de la quantité de carburant, de la différence de pression, de la température, du temps d'ouverture et du champ caractéristique de paramètre ;
- détermination du type de carburant sur la base de la viscosité.

Fig. 1

Fig. 2

Fig. 3

Fig. 4

Fig. 5

Fig. 6

Fig. 7

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 1091197 A1
- WO 0233361 A2
- DE 102006027780 A1
- EP 1944502 A1
- DE 102006027780